(19) Europäisches Patentamt
European Patent Office
Office européen des brevets

(11) **EP 2 493 050 B1**

(12) **EUROPÄISCHE PATENTSCHRIFT**

(45) Veröffentlichungstag und Bekanntmachung des Hinweises auf die Patenterteilung:
**08.07.2020 Patentblatt 2020/28**

(51) Int Cl.:
*H02J 7/00* (2006.01)     *H01M 10/44* (2006.01)
*H01M 10/0525* (2010.01)

(21) Anmeldenummer: **12001170.5**

(22) Anmeldetag: **22.02.2012**

(54) **Parallelschaltung elektrischer Speicher**

Parallel connection of electrical storage devices

Commutation parallèle d'un accumulateur électrique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.02.2011 EP 11001501**

(43) Veröffentlichungstag der Anmeldung:
**29.08.2012 Patentblatt 2012/35**

(73) Patentinhaber: **Torqeedo GmbH**
**82205 Gilching (DE)**

(72) Erfinder:
• **Biebach, Jens**
**82327 Tutzing (DE)**
• **Böbel, Friedrich, Dr.**
**82547 Eurasburg (DE)**

(74) Vertreter: **Nordmeyer, Philipp Werner et al**
**df-mp Dörries Frank-Molnia & Pohlman Patentanwälte Rechtsanwälte PartG mbB Theatinerstraße 16**
**80333 München (DE)**

(56) Entgegenhaltungen:
**EP-A2- 0 871 275     DE-A1-102009 012 908**
**US-A1- 2004 155 627**

EP 2 493 050 B1

**Beschreibung**

Die Erfindung betrifft ein Verfahren zum Parallelschalten eines ersten elektrischen nach Anspruch 1.

Die Nutzbarkeit nicht stationärer elektrischer Verbraucher, wie zum Beispiel elektrischer Antriebe, hängt wesentlich von der Kapazität des nutzbaren Speichers elektrischer Energie ab. Typische Energiespeicher für nicht stationäre Anwendungen sind elektrische Batterien, Akkumulatoren oder Kondensatoren.

Für diese Klasse von Energiespeichem ist charakteristisch, dass der Ladezustand im unbelasteten Zustand mit einer bestimmten Klemmenspannung korreliert. Bei gleicher Speichertechnologie und gleichem Ladezustand korreliert das Volumen des Speichers linear mit der gespeicherten Energiemenge, das heißt je größer der Speicher, desto größer ist die darin gespeicherte Energie.

Der maximale Energieinhalt eines Speichers hat neben Kostenaspekten auch mechanische Aspekte. Es dürfen unter Umständen bestimmte Abmessungen nicht überschritten werden, um den Einbau z.B. in einem Fahrzeug und den Transport des Speichers zu ermöglichen. Desweiteren sind auch der Gesamtmasse durch Erfordernisse, die sich aus der Handhabung und dem Transport ableiten, Grenzen gesetzt.

Übersteigt der Gesamtenergiebedarf die Grenzen eines Speichers, die sich aus den Abmessungen und der Masse ableiten, müssen mehrere Speicher zusammengeschaltet werden. Die Notwendigkeit der Zusammenschaltung mehrerer Speicher zu einem großen Speicher kann sich auch aus dem verfügbaren Einbauraum ableiten.

Handelt es sich beim Speicher um eine Batterie, ist diese aus Grundeinheiten, den Batteriezellen, aufgebaut. Der Energieinhalt einer Batteriezelle hängt von der Zellentechnologie und dem Zellenvolumen ab. Durch geeignete Wahl der Anzahl der Zellen und deren Zusammenschaltung zu sogenannten Core Packs kann der Energieinhalt und die Stromtragfähigkeit des Core Packs proportional zur Anzahl der Zellen gestaltet werden.

Durch ein geeignetes Verhältnis von Reihen- zu Parallelschaltung der Core Packs innerhalb einer Batterie ist desweiteren die Anpassung der Impedanz der Batterie an die Impedanz des Verbrauchers möglich, d.h. die Batterie kann so abgestimmt werden, dass sie in der Lage ist. auch den maximal benötigten Strom bei erforderlichem Energieinhalt zu liefern.

Die Erhöhung des Energieinhaltes des Speichers kann durch Reihenschaltung und/oder Parallelschaltung mehrerer Batterien vorgenommen werden. Bei Reihenschaltung mehrerer Batterien ergeben sich jedoch durch die erhöhte Systemspannung höhere Anforderungen an die Isolation und an Kriech- und Luftstrecken, denen die Ausführung der Einzelbatterie häufig nicht entspricht, da deren Isolationssystem ausschließlich auf das Spannungsniveau des Einzelbetriebs abgestimmt ist.

Die Parallelschaltung mehrerer Batterien wird daher bei begrenzter Spannungsfestigkeit der Einzelbatterie oder der anzuschließenden Verbraucher als geeignetere Maßnahme zur Erhöhung des Energieinhaltes des Speichers betrachtet. Dies gilt auch bei Speichern bestehend aus Akkumulatoren oder Kondensatoren.

Zur Erfüllung verschiedener Sicherheitsanforderungen sind elektrische Speicher mit einem Speicherschatter ausgestattet. Ist der Schalter deaktiviert, sind die zugängigen Speicheranschlüsse spannungsfrei.

Bei der Parallelschaltung von elektrischen Speichern werden Anschlüsse gleicher Polarität miteinander verbunden. Das ist unproblematisch, solange bei N Speichern mindestens N-1 Speicherschalter geöffnet sind.

Für die Zeit, in denen die Speicher nicht mit der gemeinsamen Sammelschiene verbunden sind, kann sich ihre Spannungslage unterschiedlich entwickeln. Ursachen hierfür können zum Beispiel das separate Laden über unterschiedliche Zeiträume oder auch die unterschiedliche Eigenentladung bei Nichtbenutzen des Speichers über einen längeren Zeitraum sein.

Sind die Spannungen der Speicher unterschiedlich, fließt nach dem Zusammenschalten von zwei Speichern, das heißt nach dem Schließen der entsprechenden zwei Speicherschalter, ein Strom vom Speicher höherer Spannung zum Speicher niedrigerer Spannung, der solange einen Ladungsausgleich bewirkt, bis die Spannungen über beiden Speichern gleich sind. Dies gilt unter der Annahme, dass keine Last an die parallel geschalteten Speicher angeschlossen wurde, über der die Spannung kleiner als die Leerlaufspannung des Speichers mit der kleineren Ladung ist. Die Höhe des Stromflusses wird definiert durch die Spannungsdifferenz zwischen beiden Speichern und dem in Reihe liegenden Widerstand. Im Falle der Parallelschaltung zweier gleicher Speicher ist bezüglich des Ausgleichstromes der doppelte Innenwiderstand eines Speichers wirksam.

Der Ausgleichsstrom führt bei N parallel geschalteten Speichern an N-1 Speicherschaltern zu Einschaltverlusten, falls sich die Spannung der zuzuschaltenden Batterie von der Spannung der bereits zugeschalteten Batterie bzw. der resultierenden Spannung der bereits zugeschalteten Batterien unterscheidet. Wird der Schalter des ersten Speichers geschlossen, findet noch kein Stromfluss statt, da die Differenzspannung noch über dem zweiten Schalter abfällt. Wird nun der Schalter des zweiten Speichers geschlossen, kommt es bis zum Erreichen des stationären Durchlasswiderstandes des Schalters zu einer Verlustleistungsspitze, die sich als Produkt von Spannungsabfall über dem Schalter und wirksamem Ausgleichsstrom ergibt. Durch die auftretende Schaltverlustleistung kommt es zur Erosion der Schaltkontakte. Die Schalter müssen daher für einen maximal zu schaltenden Strom und den Charakter der Last spezifiziert werden. Der Ausgleichsstrom bewirkt am wirksamen Ersatzwiderstand der Speicher Verluste, so dass ein Teil der gespeicherten Energie während des Vorgangs des Ladungs- und damit Spannungsausgleichs in Wärme umgewandelt wird.

Wenn zwei Lithium-Mangan-Batterien beispielsweise einen Innenwiderstand von je 1 mOhm haben und sich bei der Parallelschaltung dieser Batterien deren Batteriespannungen um beispielsweise 10 Volt unterscheidet, so fließt aufgrund des sehr geringen Innenwiderstands ein Ausgleichsstrom von 5000 A, der ein hohes Gefahrenpotential darstellen kann.

Aus der EP 1811592 B1 ist eine Batterie mit einer Sicherheitsschaltung bekannt, welche in der Verbindung zwischen den Batteriezellen und einem der Batteriepole einen Widerstand aufweist und wobei parallel zu dem Widerstand ein Schalter angeordnet ist, und wobei der Schalter erst dann geschlossen, wenn der zwischen den Batteriezellen und einem der Batteriepole fließende Strom einen vorgegebenen Minimalstrom unterschreitet.

Die EP 0 871 275 A2 zeigt eine Stromversorgung für einen Laptop oder einen PC, wobei für eine Mehrzahl an Batteriepackungen ladende FETs und entladende FETs vorgesehen sind, welche unabhängig zu- oder abgeschaltet werden.

In der DE 10 2009 012908 A1 ist eine Stromversorgung für Fahrzeuge gezeigt, die in der Lage ist, eine Beeinträchtigung eines Kondensators zu unterdrücken, eine Vorladezeitdauer zu verkürzen sowie einen Energieverlust zu unterdrücken.

Aufgabe vorliegender Erfindung ist es, ein Verfahren zur Parallelschaltung von zwei oder mehr elektrischen Speichern und eine entsprechende Schaltung vorzuschlagen, welche das Parallelschalten von Speichern unterschiedlicher Leerlaufspannung bei minimierter Beanspruchung der beteiligten Schalter ermöglichen, wobei der Ladungsausgleich zwischen den Speichern minimiert oder völlig verhindert wird. Beim Zusammenschalten zweier Speicher fließende Ausgleichsströme sollen vermieden oder möglichst auf ein Minimum begrenzt werden.

Eine weitere Aufgabe ist es, ein Verfahren und eine Schaltung aufzuzeigen, welche eine Parallelschaltung zweier elektrischer Speicher ohne oder mit nur geringer Unterbrechung der Leistungsentnahme erlauben.

Alle oder zumindest ein Teil dieser Aufgaben werden durch ein Verfahren nach Anspruch 1 gelöst. Hierdurch wird zum Beispiel bei Ladungsentnahme die elektrische Verbindung zwischen dem ersten Speicher und den Anschlussklemmen mittels des ersten Schalters hergestellt und die elektrische Verbindung zwischen dem zweiten Speicher und den Anschlussklemmen mittels des zweiten Schalters unterbrochen wird, so dass zunächst nur dem ersten Speicher Ladung entnommen wird, und dass die elektrische Verbindung zwischen dem zweiten Speicher und den Anschlussklemmen mittels des zweiten Schalters hergestellt wird, wenn die Differenz der an den Anschlussklemmen des ersten Speichers abfallenden Spannung und der Leerlaufspannung des zweiten Speichers weniger als eine vorgegebene Zuschalt-Differenzspannung beträgt.

Eine erfindungsgemäße Schaltung eines ersten elektrischen Speichers und eines zweiten elektrischen Speichers wird in Anspruch 10 offenbart.

Vorzugsweise wird bei Ladungszufuhr genau umgekehrt vorgegangen: Bei Ladungszufuhr wird zunächst die elektrische Verbindung zwischen dem zweiten Speicher und den Anschlussklemmen mittels des zweiten Schalters hergestellt und die elektrische Verbindung zwischen dem ersten Speicher und den Anschlussklemmen mittels des ersten Schalters unterbrochen, so dass zunächst nur dem zweiten Speicher Ladung zugeführt wird. Die elektrische Verbindung zwischen dem ersten Speicher und den Anschlussklemmen wird mittels des ersten Schalters erst dann hergestellt, wenn die Differenz der an den Anschlussklemmen des zweiten Speichers abfallenden Spannung und der Leerlaufspannung des ersten Speichers weniger als eine vorgegebene Abschalt-Differenzspannung beträgt.

Mittels der Messgeräte können die momentane Klemmenspannung des oder der Speicher, die bereits mit der Last verbunden sind, und die Leerlaufspannung des als nächstes zuzuschaltenden Speichers erfasst werden. Diese Werte werden in der Steuereinheit miteinander verglichen. Wenn diese beiden Werte eine vorgegebene Bedingung erfüllen, insbesondere wenn diese voneinander um nicht mehr als eine vorgegebene Zuschalt-Differenzspannung oder Abschalt-Differenzspannung abweichen, steuert die Steuereinheit den Schalter des zuzuschaltenden oder abzuschaltenden Speichers an, um diesen zu schließen oder zu öffnen. Die erfindungsgemäße Schaltung erlaubt damit die Parallelschaltung des ersten oder zweiten Speichers zu einem gemeinsamen Speicher oder die Abkopplung des ersten oder zweiten Speichers aus einer bestehenden Parallelschaltung in Abhängigkeit von der Klemmenspannung und der Leerlaufspannung des ersten oder zweiten Speichers. Mit dem Begriff Speicher ist im Folgenden ein Speicher zur Speicherung elektrischer Energie gemeint. Insbesondere wird unter einem Speicher eine Batterie, ein Akkumulator oder ein Kondensator verstanden. Entsprechend dem allgemeinen Sprachgebrauch soll im Rahmen dieser Anmeldung der Begriff Batterie auch Akkumulatoren und wiederaufladbare Batterien umfassen. Die Erfindung wird mit besonderem Vorteil zur Parallelschaltung von Lithium-Ionen-Akkumulatoren, insbesondere Lithium-Mangan-Akkumulatoren. eingesetzt, da diese Batterien- bzw. Akkumulatorentypen einen geringen Innenwiderstand aufweisen, so dass ohne Einsatz der Erfindung bei der Parallelschaltung dieser Batterien/Akkumulatoren hohe Ströme fließen könnten. Insbesondere eignet sich die Erfindung zur Parallelschaltung von Speichern, insbesondere Batterien oder Akkumulatoren, mit gleicher Nennspannung.

Unter dem Begriff Anschlussklemmen werden die Anschlüsse des Speichers verstanden, über die dem Speicher Ladung entnommen oder zugeführt werden kann. Der Begriff Klemmenspannung kennzeichnet die an diesen Anschlussklemmen anliegende Spannung.

Erfindungsgemäß ist in einer der elektrischen Verbindungsleitungen zwischen dem Speicher und den Anschlussklemmen ein Schalter vorgesehen. Wenn der Schalter geöffnet ist, das heißt die elektrische Verbindung zwischen dem Speicher und einer der Anschlussklemmen unterbrochen ist, entspricht die zwischen den beiden elektrischen Verbindungsleitungen speicherseitig des Schalters abfallende Spannung, das heißt die zwischen dem den Speicher und den Schalter verbindenden Teilstück der einen elektrischen Verbindungsleitung und der anderen elektrischen Verbindungsleitung abfallende Spannung, der Leerlaufspannung des Speichers. Bei geschlossenem Schalter entspricht diese Spannung der Klemmenspannung. Klemmenspannung und Leerlaufspannung können also mit demselben Messgerät bestimmt werden, wobei im ersten Fall der Schalter geschlossen, im zweiten Fall der Schalter geöffnet ist.

Der Schalter stellt die elektrische Verbindung zwischen dem zugeordneten Speicher und dessen Anschlussklemmen her oder unterbricht diese. Bei geöffnetem Schalter sind der Speicher und die an die Verbindungsleitung mit dem Schalter angeschlossene Anschlussklemme elektrisch voneinander entkoppelt, d.h. es besteht keine stromleitende Verbindung. Auch parallel zu der elektrischen Verbindungsleitung, in der der Schalter angeordnet ist, besteht keine elektrische Verbindung zwischen dem Speicher und der entsprechenden Anschlussklemme. Bei geöffnetem Schalter ist daher die Verbindung zwischen dem Speicher und der Anschlussklemme komplett unterbrochen. Insbesondere sind keine parallel oder anti-parallel zu dem Schalter angeordnete Diode, wie zum Beispiel eine parasitäre Diode, oder ein Widerstand vorgesehen, über die unter bestimmten Voraussetzungen Strom fließen könnte.

Erfindungswesentlich ist es, dass bei Ladungsentnahme die Angleichung der Spannungen der einzelnen Speicher durch Belastung des ersten Speichers, d.h. des zuerst mit der Last verbundenen Speichers, herbeigeführt wird. Umgekehrt erfolgt beim Laden der Speicher die Angleichung der Spannungen der einzelnen Speicher durch Ladung des zweiten Speichers, der in diesem Fall zuerst mit der Quelle verbunden wird. Die Spannungsangleichung erfolgt nicht über einen Vorladewiderstand, der beispielsweise zwischen den ersten und den zweiten Speicher geschaltet werden könnte, sondern durch Belastung oder Ladung des zuerst mit der Senke oder Quelle verbundenen Speichers. Erfindungsgemäß sind parallel zu dem Schalter weder Vorladewiderstände noch Dioden oder ähnliche Bauteile vorgesehen. Der Speicher wird entweder direkt mit den Anschlussklemmen verbunden (bei geschlossenem Schalter) oder völlig von den Anschlussklemmen getrennt (bei geöffnetem Schalter). Auf diese Weise wird die Verlustleistung bei der Parallelschaltung von Speichern möglichst niedrig gehalten.

Als Impedanz eines Speichers wird dessen elektrischer Widerstand bezeichnet, wobei die Impedanz sowohl dynamische als auch statische Anteile besitzen kann. Im stationären Betrieb entspricht die Impedanz dem Innenwiderstand des Speichers. Stationärer Betrieb bedeutet hierbei, dass über mehrere Millisekunden ein konstanter Strom geliefert wird und die in dieser Zeit auftretende Temperaturänderung des Speichers vernachlässigbar ist.

Unter den Begriffen Verbraucher oder Last wird ein elektrischer Verbraucher, insbesondere ein elektrischer Motor, verstanden, der aus dem oder den Speichern mit elektrischer Energie versorgt wird. Im weiteren Sinn kann es sich aber auch um eine Last handeln, die keinen Strom verbraucht, sondern die dem oder den Speichern Ladung zuführt. Sofern letztere Bedeutung gemeint ist, wird im Folgenden ausdrücklich darauf hingewiesen.

Beispielsweise werden die Speicher in Abhängigkeit von ihren Leerlaufspannungen zugeschaltet. Bei Ladungsentnahme wird zunächst nur dem ersten Speicher mit der höheren Leerlaufspannung Ladung entnommen. Die Angleichung der Klemmenspannung des bereits zugeschalteten ersten Speichers an die Leerlaufspannung des zweiten Speichers passiert im Wesentlichen durch den Spannungsabfall über dem Innenwiderstand des zuerst zugeschalteten ersten Speichers. Für den Fall, dass der Laststrom nicht hoch genug ist, um einen hinreichenden Spannungsabfall zu bewirken, kommt es über die Zeit zu einem Angleichen der Leerlaufspannungen durch Entladen des ersten Speichers.

In der Praxis wird diese Schaltung vorzugsweise dadurch realisiert, dass pro Speicher ein Schalter und ein Spannungsmessgerät vorgesehen sind. Der Schalter ist in einer der elektrischen Verbindungen zwischen dem Speicher und einer der Anschlussklemmen des Speichers angeordnet. Das Spannungsmessgerät misst die Spannung zwischen der Speicherseite des Schalters, d.h. zwischen dem Teilstück, welches den Speicher und den zugehörigen Schalter verbindet, und der anderen Anschlussklemme des Speichers, die direkt ohne Zwischenschaltung eines Schalters mit dem Speicher verbunden ist. Wenn der Schalter geöffnet ist und damit der entsprechende Speicher von den bzw. von einer der Anschlussklemmen getrennt ist, misst das Spannungsmessgerät die Leerlaufspannung des Speichers. Dies wird dadurch gewährleistet, dass parallel zu der den Schalter aufweisenden elektrischen Verbindungsleitung keine weitere elektrische Verbindungsleitung vorgesehen ist. Wenn der Schalter geschlossen ist, misst das Spannungsmessgerät die Klemmenspannung des Speichers. Wenn keine Last an die Anschlussklemmen angeschlossen ist, stimmen Leerlaufspannung und Klemmenspannung überein.

Die Zuschalt-Differenzspannungen beim Entladevorgang und die Zuschalt-Differenzspannungen beim Ladevorgang können unabhängig voneinander gewählt werden. Beide Werte können sowohl positiv, negativ als auch Null sein. Je weiter die Zuschalt-Differenzspannung dem Wert Null angenähert wird, umso weiter konvergiert auch der Ausgleichstrom gegen Null und umso geringer ist die Beanspruchung des Schalters, der das Parallelschalten realisiert. Beim Entladen wird im Fall einer positiven Zuschalt-Differenzspannung der zweite Speicher parallel geschaltet, wenn die äußere Klemmenspannung, d.h. die Spannung zwischen den Klemmen, an die die Last angeschlossen ist, auf einen Wert gefallen ist, der der Leerlaufspannung des zweiten Speichers plus dem Betrag der Zuschalt-Differenzspannung entspricht. Umgekehrt wird bei einer negativen Zuschalt-Differenzspannung der zweite Speicher parallel geschaltet, wenn die äußere Klemmenspannung auf einen Wert gefallen ist, der der Leerlaufspannung des zweiten Speichers minus dem Betrag der Zuschalt-Differenzspannung entspricht. Für die beim Ladevorgang gewählte Zuschalt-Differenzspannung gilt Entsprechendes.

Das Parallelschalten zweier elektrischer Speicher erfolgt dann optimal, wenn der Spannungsunterschied zum Zeitpunkt des Parallelschaltvorganges Null oder zumindest minimal ist. Je kleiner der Spannungsunterschied zwischen den Energiespeichern ist, umso kleiner ist der Spannungsabfall über dem zuletzt schließenden Schalter und umso geringer ist auch der zu erwartende Ausgleichsstrom, so dass sich die Verringerung des Spannungsunterschiedes quadratisch bezüglich der Reduzierung der Schalterverluste und damit auch bezüglich der Reduzierung des Schalterverschleißes auswirkt.

Beim Parallelschalten zweier elektrischer Speicher wird erfindungsgemäß zunächst der Speicher mit der höheren Leerlaufspannung an den elektrischen Verbraucher bzw. die Last angeschlossen.

Die Ermittlung der Leerlaufspannung eines Speichers kann bei nicht mit dem Speicher verbundener Last beispielsweise durch Messung der an den Anschlussklemmen des Speichers anliegenden Klemmenspannung erfolgen. Da ohne Last kein Strom fließt, kommt es am Innenwiderstand bzw. an der Impedanz des Speichers zu keinem Spannungsabfall, so dass die Klemmenspannung gleich der Leerlaufspannung des Speichers ist.

Ist der Speicher mit einer Last verbunden, kann die Leerlaufspannung aus der Klemmenspannung und der über dem Innenwiderstand des Speichers abfallenden Spannung bestimmt werden. Letzterer Spannungsabfall kann beispielsweise bei Kenntnis des Innenwiderstandes aus dem momentanen Stromfluss errechnet werden. In einer bevorzugten Ausführungsform ist daher ein Strommessgerät zur Erfassung des von oder zu dem ersten und/oder zweiten Speicher fließenden Stroms vorgesehen.

Nach dem Anschließen der Last an den ersten Speicher und gegebenenfalls nach dem Einschalten der Last wird dem ersten Speicher Ladung entzogen. Je nach aufgenommener Leistung und daraus resultierendem Strom tritt an der Impedanz des ersten Speichers ein Spannungsabfall auf, um den sich die Klemmenspannung gegenüber der Leerlaufspannung des ersten Speichers vermindert. In dieser Phase wird die Last ausschließlich über den ersten Speicher mit elektrischer Energie versorgt.

Neben der Annäherung der Klemmenspannung des ersten Speichers an die Leerlaufspannung des zweiten Speichers durch den Spannungsabfall über dem Innenwiderstand des ersten Speichers wird auch erreicht, dass sich der erste Speicher, der den Strom liefert, entlädt, so dass sich die Leerlaufspannungen des ersten und des zweiten Speichers mit der Zeit angleichen.

Wird der erste Speicher hinreichend hoch belastet, d.h. es wird dem ersten Speicher genügend Strom entnommen, kann sich die an den Anschlussklemmen des ersten Speichers abfallende Spannung an die Leerlaufspannung des zweiten Speichers um weniger als eine vorgegebene Zuschalt-Differenzspannung annähern.

Wenn sich die Klemmenspannung des ersten Speichers und die Leerlaufspannung des zweiten Speichers bis auf die Zuschalt-Differenzspannung angeglichen haben, kann der zweite Speicher mit nur geringer Verlustleistung und ohne größere Belastung der Schalter parallel zum ersten Speicher geschaltet werden, so dass die Last in der Folge mit Energie aus dem ersten und dem zweiten Speicher versorgt wird.

Für die Speicher ist unter Umständen ein maximal zulässiger Strom definiert. Wird dieser überschritten, besteht die Gefahr, dass der Speicher geschädigt wird. Von Vorteil ist daher eine Steuerung vorgesehen, welche dafür sorgt, dass der aus den Speichern abgezogene Strom den maximalen Strom des jeweiligen Speichers nicht übersteigt. Dies ist insbesondere in der ersten Phase, in der der Strom ausschließlich vom ersten Speicher geliefert wird, von Bedeutung. Von Vorteil wird daher überwacht, dass der Strom nicht den Maximalstrom der angeschlossenen Speicher, insbesondere des ersten Speichers, überschreitet.

Der zweite Speicher wird durch Schließen eines Schalters parallel zum ersten Speicher geschaltet Da der Schalter für den Schließvorgang eine bestimmte Zeit benötigt, ist es günstig, wenn der aus dem ersten Speicher abgezogene Strom, bei dem der Spannungsabfall am Innenwiderstand des ersten Speichers den gewünschten Wert hat, während des Schaltvorgangs konstant gehalten wird. Da die hierfür benötigte Zeit im Millisekundenbereich liegt, ist beispielsweise bei der Versorgung eines elektrischen Antriebs eine entsprechende Verzögerung Im Antriebsstrang eines Fahrzeuges nicht spürbar.

Bei weiterer Erhöhung des Laststromes wird auch dem zweiten Speicher Ladung entzogen. Unter der Annahme identischer Speicher mit gleichen Temperaturen und gleichem Erholungszustand nimmt der Strom aus dem ersten Speicher um den gleichen Betrag zu wie der Strom aus dem zweiten Speicher. Beide Speicher werden aber weiterhin unterschiedlich stark beansprucht, so dass der erste Speicher stärker als der zweite Speicher entladen wird und sich die Leerlaufspannungen beider Speicher angleichen.

Bei Reduzierung der Verbraucherleistung sinkt der Strom und die Klemmenspannung, d.h. die Spannung zwischen den Anschlussklemmen, an die die Last angeschlossen ist, erhöht sich. Wenn die Klemmenspannung wieder größer als die Leerlaufspannung des zweiten Speichers wird, ist es sowohl möglich, die Parallelschaltung von erstem und zweitem Speicher beizubehalten als auch den zweiten Speicher abzuschalten, das heißt, die stromleitende Verbindung zwischen den äußeren Anschlussklemmen, an die die Last angeschlossen ist, und dem zweiten Speicher zu unterbrechen. Das Abschalten des zweiten Speichers erfolgt vorzugsweise dann, wenn die Klemmenspannung sich um eine bestimmte Abschalt-Differenzspannung von der Leerlaufspannung des zweiten Speichers unterscheidet und/oder wenn der zweite Speicher aufgrund der sich ändernden Lastverhältnisse nur noch einen vernachlässigenden oder keinen Betrag zur Speisung der Last leistet oder wenn der zweite Speicher sogar beginnt, Energie aufzunehmen.

Da der zweite Speicher in dieser Situation mit der Last verbunden ist, kann dessen Leerlaufspannung nicht direkt gemessen werden. Die Leerlaufspannung wird daher von Vorteil aus der Klemmenspannung und der über dem Innenwiderstand des Speichers abfallenden Spannung bestimmt. Letzterer Spannungsabfall kann beispielsweise bei Kenntnis des Innenwiderstandes aus dem momentanen Stromfluss errechnet werden.

Eine andere Möglichkeit, den Abschaltzeitpunkt des zweiten Speichers zu bestimmen, besteht darin, den Strom von bzw. zu dem zweiten Speicher zu messen und den zweiten Speicher dann abzuschalten, wenn dieser Strom einen vorgegebenen Maximalstrom unterschreitet

Auch beim Abschalten ist es günstig, den Strom während des Abschaltens des zweiten Speichers konstant zu halten.

Das Abschalten eines Speichers wird jedoch frühestens dann stattfinden, wenn der Gesamtstrom den zulässigen Strom eines einzelnen Schalters bzw. Speichers nicht mehr übersteigt. Eine zeitige Abschaltung des zweiten Speichers unmittelbar nachdem die Klemmenspannung die Leerlaufspannung des zweiten Speichers überschritten hat verhindert Verluste, die aus dem Ladungsausgleich zwischen den Speichern resultieren würden.

Von Vorteil erfolgt die Zuschaltung der einzelnen Speicher spannungsabhängig und deren Abschaltung stromabhängig. Der zweite Speicher wird dann zugeschaltet, wenn die Differenz der an den Anschlussklemmen des ersten mit der Last bereits verbundenen Speichers abfallenden Spannung und der Leerlaufspannung des zweiten Speichers weniger als eine vorgegebene Zuschalt-Differenzspannung beträgt. Umgekehrt wird die Abschaltung, d.h. Trennung eines Speichers von der Last, vorzugsweise stromabhängig durchgeführt. Bei Lastreduzierung wird der zweite Speicher vorzugsweise dann abgetrennt, d.h. der zugeordnete zweite Schalter wird geöffnet, wenn der Strom von bzw. zu dem zweiten Speicher einen vorgegebenen Wert unterschreitet.

In einer weiteren bevorzugten Ausführungsform werden Signale mit einer Lastschaltung ausgetauscht, welche zur Steuerung oder Regelung der Last dient, die von dem ersten und/oder zweiten Speicher mit Ladung versorgt wird. Die Signale von der Lastschaltung werden zumindest mitgenutzt, um während des Zu- oder Abschaltens des ersten oder zweiten Speichers den zu oder von den Speicher(n) fließenden Strom konstant zu halten. Während der Schaltvorgänge wird der Laststrom in Abhängigkeit von diesen Signalen und gegebenenfalls in Abhängigkeit von weiteren Größen konstant gehalten.

Um eine Instabilität des Systems im Bereich des Umschaltpunktes zu vermeiden, ist es günstig, eine Hysterese vorzusehen. Zuschaltung und Abschaltung des Speichers werden bei unterschiedlichen Spannungen durchgeführt. Das heißt die Zuschalt-Differenzspannung beim Zuschalten eines Speichers unterscheidet sich von der Abschalt-Differenzspannung beim Abschalten des Speichers.

Der erste Speicher oder der zweite Speicher können jeweils mehrere parallel geschaltete Speicher aufweisen, die vorzugsweise in analoger Weise parallelgeschaltet werden oder wurden. Das heißt, das erfindungsgemäße Verfahren kann auch mit Vorteil bei mehr als zwei Speichern angewendet werden. Zuerst wird ermittelt, welcher Speicher die höchste Leerlaufspannung hat. Dieser Speicher wird im Sinne der Erfindung als erster Speicher angesehen und zuerst eingeschaltet und belastet. Weicht die Klemmenspannung dieses ersten Speichers um weniger als die Zuschalt-Differenzspannung von der Leerlaufspannung des Speichers mit der zweithöchsten Leerlaufspannung ab, wird der zweite Speicher eingeschaltet.

Bei weiter steigender Belastung wird der Augenblick abgewartet, zu dem die gemeinsame Klemmenspannung von erstem und zweitem Speicher von der Leerlaufspannung des Speichers mit der dritthöchsten Leerlaufspannung um weniger als die Zuschalt-Differenzspannung abweicht. Dann wird auch der Speicher mit der dritthöchsten Leerlaufspannung parallel geschaltet. Dieses Verfahren kann für eine beliebige Anzahl N von Speichern wiederholt werden. Die bereits parallel geschalteten Speicher können hierbei als erster Speicher im Sinne der Erfindung angesehen werden, denen der als nächstes zuzuschaltende Speicher als zweiter Speicher im Sinne der Erfindung zusätzlich parallel geschaltet wird.

Bei mehreren parallel zu schaltenden Speichern werden vorzugsweise jeweils identische Zuschalt-Differenzspannungen gewählt. Dies gilt sowohl für den Entlade- als auch für den Ladevorgang. Die Parallelschaltung des N-ten Speichers erfolgt jeweils dann, wenn die Klemmenspannung der bereits parallelgeschalteten N-1 Speicher um eine feste Zuschalt-Differenzspannung von der Leerlaufspannung des N-ten Speichers abweicht. Die Zuschalt-Differenzspannung ist dabei dieselbe, unabhängig davon, welcher Speicher zugeschaltet wird. Es ist aber auch möglich, für die (N-1) Zuschaltvorgänge unterschiedliche Zuschalt-Differenzspannungen zu wählen, da mit jedem parallelgeschalteten Speicher der Innenwiderstand abnimmt, so dass der Ausgleichsstrom bei gleichbleibender Differenzspannung zunehmen würde. Bevorzugt wird deshalb die Zuschalt-Differenzspannung indirekt proportional zur Anzahl der bereits parallelgeschalteten Speicher gewählt.

Das erfindungsgemäße Verfahren wird vorzugsweise auch beim Laden der Speicher eingesetzt. Die Erfindung erlaubt zum Beispiel das gleichzeitige Laden des ersten und des zweiten Speichers (und gegebenenfalls weiterer Speicher) mit einem Ladegerät hoher Leistung. Von Vorteil wird die Erfindung beispielsweise auch bei einer Rückgewinnung von Bremsenergie eingesetzt. Die obigen im Zusammenhang mit dem Entladen der Speicher gemachten Aussagen gelten in analoger Weise, wobei sich die Reihenfolge der Zuschaltung der Speicher umdreht. Beim Laden wird zunächst nur der Speicher mit der kleinsten Leerlaufspannung geladen. Wenn die Klemmenspannung des an das Ladegerät angeschlossenen Speichers um weniger als eine vorgegebene Zuschalt-Differenzspannung von der Leerlaufspannung des Speichers mit der nächsthöheren Leerlaufspannung abweicht, wird auch dieser Speicher parallel geschaltet und beide Speicher werden geladen.

Die Zuschalt-Differenzspannung beim Ladevorgang kann genauso groß gewählt werden wie die Zuschalt-Differenzspannung beim Entladevorgang. Es ist aber auch möglich, unterschiedliche Zuschalt-Differenzspannungen beim Laden und Entladen vorzusehen, um den Charakteristika des Lade- und Entladevorgangs besser gerecht zu werden.

Das Parallelschalten zweier elektrischer Speicher erfolgt dann optimal, wenn der Spannungsunterschied zum Zeitpunkt des Parallelschaltvorganges minimal ist. Es wird daher eine Zuschalt-Differenzspannung $V_d$ von

$$V_d < I_{max} * R$$

gewählt, wobei es sich bei $I_{max}$ um den kleineren Wert des maximal zulässigen Stroms beim Zu- bzw. Abschalten des zweiten Speichers 2 und des Maximalstroms, der dem ersten und/oder zweiten Speicher 1, 2 zulässigerweise entnommen werden darf, handelt und bei R um den nach der Parallelschaltung wirksamen Widerstand. $I_{max}$ stellt sich als der kleinere Wert des maximal zulässigen Schalterstroms und des maximal zulässigen Batteriestroms dar.

Mit besonderem Vorteil wird der Wert der Zuschalt-Differenzspannung zu

$$V_d < 0,1 * I_{max} * R$$

gewählt. Im Idealfall besteht beim Entladen zwischen der Klemmenspannung des ersten Speichers und der Leerlaufspannung des zweiten Speichers bzw. beim Laden zwischen der Klemmenspannung des zweiten Speichers und der Leerlaufspannung des ersten Speichers kein Spannungsunterschied.

Die Erfindung eignet sich insbesondere zur Parallelschaltung von Batterien oder Akkumulatoren, insbesondere Lithium-Ionen-Akkumulatoren, ganz besonders Lithium-Mangan-Akkumulatoren. Lithium-Ionen-Akkumulatoren besitzen einen sehr niedrigen Innenwiderstand, so dass bei der Parallelschaltung solcher Akkumulatoren auch bei geringen Spannungsdifferenzen sehr große Ausgleichsströme fließen können. Die Erfindung vermeidet solche Ausgleichsströme bzw. begrenzt diese.

Die erfindungsgemäße Schaltung wird mit Vorteil In elektrischen Antrieben, insbesondere elektrischen Bootsantrieben, eingesetzt.

Die Erfindung sowie weitere Einzelheiten der Erfindung werden im Folgenden anhand von in den Zeichnungen schematisch dargestellten Ausführungsbeispielen näher erläutert. Hierbei zeigen:

Figur 1      das Ersatzschaltbild einer Parallelschaltung mehrerer Lithium-Ionen-Batterien,

Figur 2      die U-I-Kennlinien bei der erfindungsgemäßen Parallelschaltung zweier Lithium-Ionen-Batterien,

Figur 3      die U-I-Kennlinien bei der erfindungsgemäßen Parallelschaltung dreier Lithium-Ionen-Batterien und

Fig. 4, 5      die Kennlinien bei Nutzung einer Hysterese.

Allen Figuren werden folgende vereinfachende Annahmen zugrundegelegt, um das Wesen der Erfindung besser darstellen zu können: Die Impedanzen bzw. Innenwiderstände sowie die Leerlaufspannungen der Speicher sind über die betrachteten Arbeitspunkte konstant. Die Erfindung ist aber nicht auf diesen Fall beschränkt.

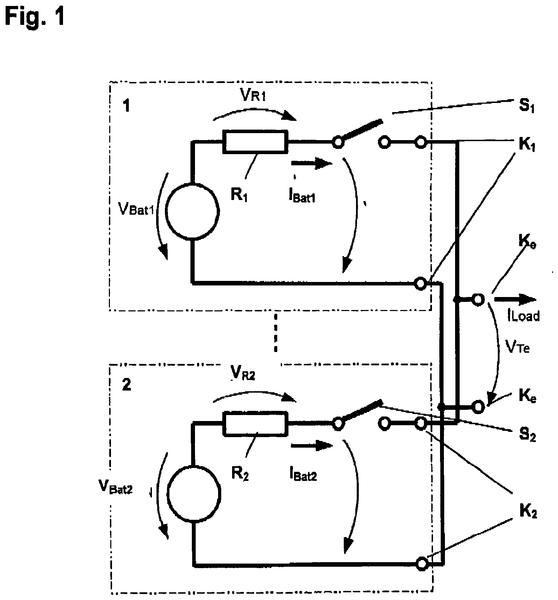

In Figur 1 ist das Ersatzschaltbild der Parallelschaltung einer ersten Lithium-Ionen-Batterie 1 mit weiteren Lithium-Ionen-Batterien dargestellt, wobei der Übersichtlichkeit halber in der Figur nur eine zweite Lithium-Ionen-Batterie 2 gezeigt ist. Die Erfindung sowie weitere vorteilhafte Ausgestaltungen der Erfindung werden im Folgenden beispielhaft an der Parallelschaltung von Lithium-Ionen-Batterien bzw. Lithium-Ionen-Akkumulatoren beschrieben. Die Erfindung ist aber nicht auf Lithium-Ionen-Batterien beschränkt und alle Ausführungen sind auch auf elektrische Speicher von anderem Typ übertragbar. Wie eingangs bereits angemerkt, umfasst der Begriff Batterie insbesondere auch wiederaufladbare Batterien und Akkumulatoren.

Die Lithium-Ionen-Batterien 1, 2 besitzen Jeweils eine Leerlaufspannung $V_{Bat1}$, $V_{Bat2}$, und eine Impedanz $R_1$, $R_2$, über der bei Belastung der Lithium-Ionen-Batterie 1, 2 eine Spannung $V_{R1}$, $V_{R2}$ abfällt. Die Batterien 1, 2 sind mit je einem Schalter $S_1$, $S_2$ versehen, mittels derer eine der Anschlussklemmen $K_1$, $K_2$ mit der jeweiligen Batterie 1, 2 stromleitend verbunden oder von dieser getrennt werden kann. Die Anschlussklemmen $K_1$, $K_2$ sind mit äußeren Anschlüssen $K_e$ verbunden, an die ein elektrischer Verbraucher, beispielsweise ein Elektromotor, angeschlossen ist.

Für die folgenden Betrachtungen wird davon ausgegangen, dass die Leerlaufspannung $V_{Bat1}$ der ersten Batterie 1 größer ist als die Leerlaufspannung $V_{Bat2}$ der zweiten Batterie 2.

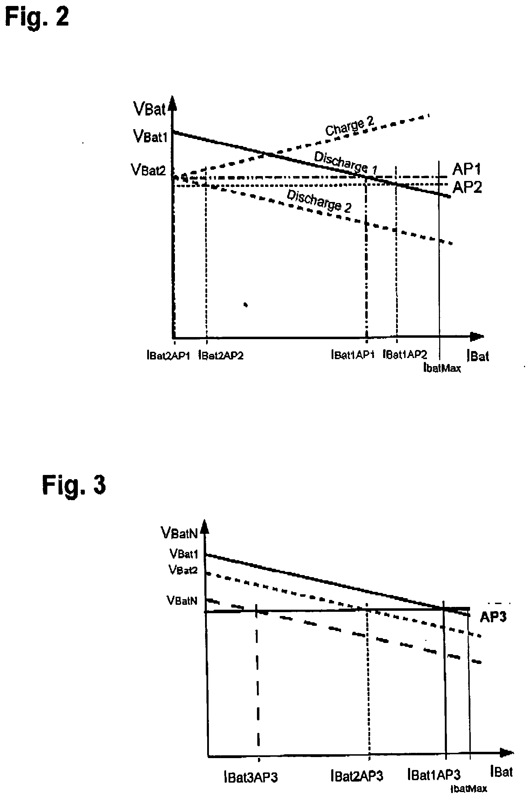

Zunächst wird nur Schalter $S_1$ geschlossen, so dass der Verbraucher ausschließlich aus der ersten Batterie 1 mit Energie versorgt wird. Die Klemmenspannung $V_{Te}$ an den äußeren Anschlüssen $K_e$ entspricht der Spannung an den Anschlussklemmen $K_1$ der ersten Batterie 1. Mit steigendem Strom fällt die Klemmenspannung $V_{Te}$ an den äußeren Anschlüssen $K_e$ ab. Die mit "Discharge 1" bezeichnete Kurve in Figur 2 stellt den Verlauf der Klemmenspannung $V_{Te}$ in Abhängigkeit vom Strom zum Verbraucher dar.

Die Gerade AP1 in Figur 2 stellt den Arbeitspunkt dar, zu dem die Klemmenspannung $V_{Te}$ soweit abgefallen ist, dass diese der Leerlaufspannung $V_{Bat2}$ der zweiten Batterie 2 entspricht. Im vorliegenden Beispiel ist die Zuschalt-Differenzspannung zu Null gewählt worden. Wenn sich die Klemmenspannung $V_{Te}$ der Leerlaufspannung $V_{Bat2}$ angeglichen hat, ist der Spannungsabfall über dem Schalter $S_2$ Null und der Schalter $S_2$ kann verlustleistungsfrei und verschleißfrei geschlossen werden. Das Schließen des Schalter $S_2$ dauert nur wenige Millisekunden. In dieser Zeit wird der Verbraucher so gesteuert, dass der fließende Strom konstant bleibt.

Im Arbeitspunkt AP1 liefert die zweite Batterie 2 noch keinen Strom in die Last, da der korrespondierende Strom für das aktuelle Spannungsverhältnis Null ist. Erst bei weiterer Erhöhung des Laststromes und damit weiter sinkender Spannung $V_{Te}$ (beispielsweise Arbeitspunkt AP2) nimmt der Strom aus beiden Batterien 1, 2 um den gleichen Betrag zu (siehe Verlauf der Kurven "Discharge 1" und "Discharge 2" in Figur 2). Da der bezüglich der Last wirksame Innenwiderstand durch die Parallelschaltung beider Lithium-Ionen-Batterien 1, 2 halbiert wurde, ist der Spannungsabfall je Zunahme an Leistungseinheit jedoch nur noch halb so groß wie bei dem System, welches mit nur einer Batterie betrieben wurde.

Der zum Verbraucher fließende Laststrom ergibt sich als Summe der beiden Batterieströme. Da beide Lithium-Ionen-Batterien 1, 2 weiterhin unterschiedlich beansprucht werden, wird Batterie 1 stärker entladen als Batterie 2, so dass sich die Leerlaufspannungen beider Batterien 1, 2 angleichen. Der von den Batterien 1, 2 lieferbare Gesamtstrom ist umso höher, je weiter die Leerlaufspannungen der Batterien 1, 2 einander angeglichen sind, da der Beitrag der zweiten Batterie 2 proportional steigt. Diese Angleichung passiert bei Klemmspannungen $V_{Te}$, die kleiner oder gleich AP1 sind, ohne dass hierfür Ladungen von der Batterie 1 mit höherer Leerlaufspannung zur Batterie 2 mit niedrigerer Leerlaufspannung transportiert werden.

Das Verfahren wird analog bei mehr als zwei Batterien 1, 2, N angewendet. Hier wird ebenfalls zuerst ermittelt, welche Batterie die höchste Leerlaufspannung $V_{Bat}$ hat. In Figur 3 ist dies die Batterie 1. Die Batterie 1 wird daher zuerst eingeschaltet und belastet. Ist die Klemmspannung $V_{Te}$ auf die Leerlaufspannung $V_{Bat2}$ der Batterie 2 mit der zweithöchsten Spannung gefallen, wird diese eingeschaltet. Bei weiter steigender Belastung wird der Augenblick abgewartet, an dem die gemeinsame Klemmspannung $V_{Te}$ der Leerlaufspannung $V_{Bat3}$ der Batterie 3 mit der dritthöchsten Spannung entspricht, so dass dieser ebenfalls eingeschaltet werden kann. Dieses Verfahren kann für eine beliebige Anzahl N von Batterien wiederholt werden. Selbstverständlich ist diese Art der Parallelschaltung mehrerer Batterien auch bei Zuschalt-Differenzspannungen ungleich Null möglich, jedoch mit erhöhter Beanspruchung der Schalter.

In Figur 3 ist beispielhaft die Stromaufteilung bei der Parallelschaltung von N Batterien im Arbeitspunkt AP3 gezeigt. Der Laststrom $I_{Load}$ berechnet sich in diesem Fall zu:

$$I_{Load} = I_{Bat1AP3} + I_{Bat2AP3} + \ldots + I_{BatNAP3}.$$

Solange die externe Klemmspannung $V_{Te}$ unterhalb der kleinsten Leerlaufspannung der aktiven Batterien 1, 2, N liegt, liefern alle Batterien 1, 2, N ausschließlich in die Last Strom. Als aktive Batterien werden diejenigen Batterien bezeichnet, deren zugeordneter Schalter geschlossen ist und die mit den äußeren Anschlüssen $K_e$ elektrisch leitend verbunden sind. Wird die Leistung zurückgenommen, so dass die externe Klemmspannung über eine oder mehrere Leerlaufspannungen der bereits aktiven Batterien ansteigt, werden die Batterien, deren Leerlaufspannung unterhalb der Klemmenspannung liegt, geladen, die anderen Batterien liefern den Strom hierfür.

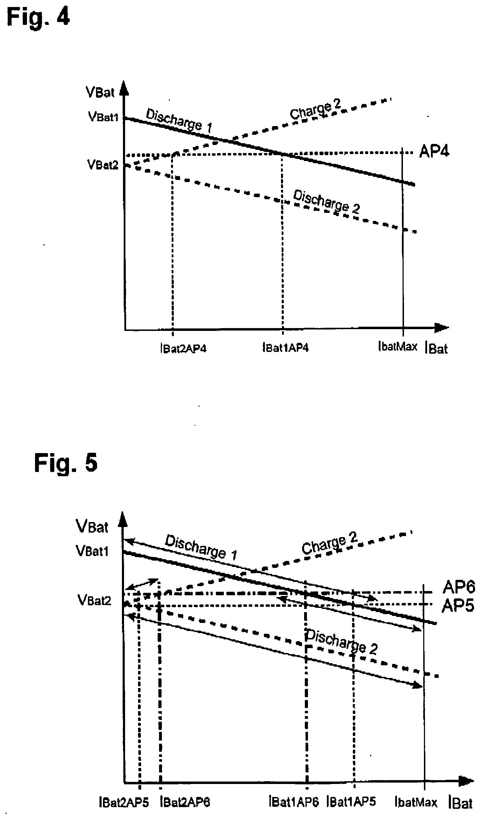

Figur 4 zeigt dies für den Fall zweier parallel geschalteter Batterien 1, 2. Beide Batterien 1, 2 wurden zuvor mit den äußeren Anschlüssen $K_e$ elektrisch leitend verbunden, d.h. die jeweiligen Schalter $S_1$, $S_2$ wurden geschlossen. Das heißt, die Klemmenspannung war zwischenzeitlich mindestens auf den Wert der Leerlaufspannung $V_{Bat2}$ des Akkumulators 2 abgefallen. Nach Verringerung der von dem Verbraucher abgezogenen Leistung ist die Klemmenspannung $V_{Te}$ wieder auf den Arbeitspunkt AP4 angestiegen. Die Leerlaufspannung $V_{Bat2}$ der Batterie 2 ist dann niedriger als die äußere Klemmenspannung $V_{Te}$, die Leerlaufspannung $V_{Bat1}$ der Batterie 1 ist höher als die äußere Klemmenspannung $V_{Te}$. Die Batterie 1 liefert dann sowohl Strom für den Verbraucher als auch zum Laden der Batterie 2 und die ursprüngliche Energiequelle Batterie 2 wird zu einer Energiesenke, d.h.

einem Verbraucher. Dieser Ladungsausgleich zwischen den Batterien 1, 2 bei Rücknahme der Leistung bietet den Vorteil, dass der maximal verfügbare Strom schneller erreicht wird.

Der oben beschriebene Ladungsausgleich bei Reduzierung der Leistung hat aber auch den Nachteil, dass durch den von Batterie 1 zu Batterie 2 fließenden Strom zusätzliche Verluste entstehen. Der schnellere Ladungsausgleich wird daher beispielsweise bei Anschluss eines elektrischen Antriebs mit reduzierter Reichweite erkauft. Es kann deshalb auch vorteilhaft sein, nach einer Rücknahme der Verbraucherleistung und einem damit verbundenen Anstieg der äußeren Klemmenspannung die Batterie oder allgemein den Speicher, dessen Leerlaufspannung unterhalb der äußeren Klemmenspannung liegt, abzuschalten, das heißt den zugehörigen Schalter zu öffnen. In diesem Fall sind nach einer Reduzierung der Leistung nur noch diejenigen Speicher parallel geschaltet und tragen zur Stromversorgung des Verbrauchers bei, deren Leerlaufspannung größer als die momentane Klemmenspannung ist.

Um eine Instabilität des Systems im Bereich des Umschaltpunktes zu vermeiden, ist eine Hysterese vorgesehen. Zuschaltung und Abschaltung der Batterie 2 bzw. allgemein des Speichers erfolgen nicht bei derselben Spannung, sondern bei unterschiedlichen Spannungen. So wird beispielsweise die Batterie 2 dann zugeschaltet, d.h. parallel geschaltet, wenn die äußere Klemmenspannung $V_{Te}$ mit der Leerlaufspannung $V_{Bat2}$ der Lithium-Ionen-Batterie 2 übereinstimmt. Dies entspricht dem Arbeitspunkt 5 in Figur 5. Die Abschaltung der Batterie 2 erfolgt dagegen erst dann, wenn die Klemmenspannung $V_{Te}$ um einen bestimmten Wert über der Leerlaufspannung $V_{Bat2}$ der Lithium-Ionen-Batterie 2 liegt. Im Beispiel gemäß Figur 5 ist dies bei einer Klemmenspannung entsprechend dem Arbeitspunkt 6 der Fall. Die Klemmenspannung $V_{Te}$ muss also mindestens die Leerlaufspannung $V_{Bat2}$ plus eine bestimmte Abschalt-Differenzspannung erreichen.

Die Hysterese kann beispielsweise auch dadurch erreicht werden, dass die Zuschaltspannung unterhalb der Leerlaufspannung des zuzuschaltenden Speichers und die Abschalt-Differenzspannung bei der Leerlaufspannung des abzuschaltenden Speichers liegt. In diesem Fall ist die Zuschalt-Differenzspannung beim Zuschalten des zweiten Speichers 2 negativ und die Abschalt-Differenzspannung beim Abschalten des zweiten Speichers 2 gleich Null.

Sehr günstige Verhältnisse erhält man, wenn die Hysterese so klein wie möglich gewählt wird und die Hysteresspannungsdifferenz symmetrisch um die Leerlaufspannung des zu- bzw. abzuschaltenden Speichers 2 gelegt wird, so dass das Zuschalten unterhalb der Leerlaufspannung und das Abschalten oberhalb der Leerlaufspannung des zu aktivierenden/zu deaktivierenden Speichers 2 stattfindet. Die Zuschalt-Differenzspannung beim Zuschalten des zweiten Speichers 2 und die Abschalt-Differenzspannung beim Abschalten des zweiten Speichers 2 besitzen vorzugsweise denselben Betrag, sind aber negativ im Falle des Zuschaltens bzw positiv im Falle des Abschaltens des zweiten Speichers 2. Im Beispiel nach Figur 5 entspricht die Hysteresspannungsdifferenz der Differenz der Spannungen in den Arbeitspunkten AP5 und AP6. Es wird im Arbeitspunkt AP5 zugeschaltet und im Arbeitspunkt AP6 wird abgeschaltet.

Die Leerlaufspannung kann nur bei unbelasteter Batterie ermittelt werden. Wird der Batterie Ladung entnommen, oder wird der Batterie Ladung zugeführt, ändert sich die Leerlaufspannung. Damit ändert sich der optimale Arbeitspunkt für das Abschalten. Um sicherzustellen, dass der Schalterstrom beim Abschalten die zulässigen Grenzen nicht überschreitet, ist es sinnvoll, die sich ändernde Leerlaufspannung im belasteten Zustand der Batterie mit einem Batteriemodell zu berechnen. Die Leerlaufspannung der abzuschaltenden Batterie wird vorzugsweise unter Verwendung eines Batteriemodells berechnet.

Die Steuerung des Abschaltens der Schalter kann alternativ zur oben beschriebenen Methode über die Differenzspannung auch basierend auf der Messung des Batteriestromes vorgenommen werden, Das Ausschalten findet bevorzugt dann statt, wenn der Strom durch den zu betätigenden Schalter Null oder nahe Null ist. Mit Rücksicht auf die Stabilität der Systemzustände soll das Ein- und Ausschalten einer Stromhysterese folgen. Unter der Annahme das ein motorischer Strom, bei dem die Batterie Energie aufnimmt, d.h. die Batterie wird geladen, positiv gezählt wird bzw. ein positives Vorzeichen hat, findet das Schließen des Schalters des zweiten Speichers bei kleineren Stromwerten statt als das Öffnen des Schalters. Bevorzugt werden Schließen und Öffnen des Schalters symmetrisch zum Stromwert Null stattfinden. Bei diesem Vorgehen wird im Falle der Lieferung von Energie an den Verbraucher die Batterie mit der niedrigeren Energie dann abgeschaltet, wenn ihr Strom um einen bestimmten Wert motorisch geworden ist, d.h., wenn die Batterie beginnt Energie aufzunehmen, was dann passiert, wenn die Leerlaufspannung der Batterie unterhalb der äußeren Klemmspannung liegt.

Beim Laden wird dieses Verfahren dahingehend geändert, dass die Batterie mit der höheren Ladung dann abgeschaltet wird, wenn deren Strom um einen bestimmten Wert beginnt generatorisch zu werden, d.h. die Batterie beginnnt Energie zu liefern.

Die Schaltung des ersten elektrischen Speichers und des zweiten elektrischen Speichers weist hierzu von Vorteil pro Speicher ein Strommessgerät zur Erfassung des von oder zu dem Speicher fließenden Stroms auf. Als Kriterium für das Abschalten des zweiten Speichers dient der von dem Strommessgerät bestimmte Strom. Das Strommessgerät misst das Vorzeichen des Stroms, das heißt, es ermittelt, ob der Strom zu dem zweiten Speicher fließt oder von dem zweiten Speicher abgezogen wird. Je nachdem, ob der zweite Speicher motorisch oder generatorisch arbeitet, wird der zweite Speicher von den Anschlussklemmen abgekoppelt. Von Vorteil wird zusätzlich der Betrag des Stroms von dem Strommmessgerät gemessen und das Abschalten des zweiten Speichers auch in Abhängigkeit vom Strombetrag geregelt.

Bei motorischer Last, das heißt wenn ein Verbraucher oder eine Last mit Strom versorgt werden, kann der zweite Speicher dann von dem ersten Speicher und dem Verbraucher getrennt werden, wenn ein bestimmter Mindeststrom vom ersten Speicher zu dem zweiten Speicher fließt Der zweite Speicher arbeitet dann nicht mehr motorisch, sondern generatorisch. Umgekehrt findet bei einer generatorischen Last das Abschalten des abzuschaltenden Speichers bei einem bestimmten motorischen Stromwert statt.

**Patentansprüche**

1. Verfahren zum Parallelschalten eines ersten elektrischen Speichers (1), insbesondere einer Batterie, bevorzugt einer Lithium-Ionen-Batterie, und eines zweiten elektrischen Speichers (2), insbesondere einer Batterie, bevorzugt einer Lithium-Ionen-Batterie,

   - wobei der erste elektrische Speicher und der zweite elektrische Speicher jeweils eine Leerlaufspannung ($U_{Bat1}$, $U_{Bat2}$) und eine Impedanz ($R_1$ bzw. $R_2$) besitzen,
   - wobei der erste elektrische Speicher (1) über zwei erste elektrische Leiter mit Anschlussklemmen ($K_e$) zur Ladungsentnahme oder Ladungszufuhr verbunden ist, wobei in einem der ersten elektrischen Leiter ein erster Schalter ($S_1$) vorgesehen ist und wobei mittels des ersten Schalters ($S_1$) die elektrische Verbindung zwischen dem ersten Speicher (1) und einer der Anschlussklemmen ($K_e$) hergestellt oder unterbrochen werden kann,
   - wobei der zweite elektrische Speicher (2) über zwei zweite elektrische Leiter mit den Anschlussklemmen ($K_e$) verbunden ist, wobei in einem der zweiten elektrischen Leiter ein zweiter Schalter ($S_2$) vorgesehen ist und wobei mittels des zweiten Schalters ($S_2$) die elektrische Verbindung zwischen dem zweiten Speicher (2) und einer der Anschlussklemmen ($K_e$) hergestellt oder unterbrochen werden kann,
   - wobei die Leerlaufspannung $U_{Bat1}$ des ersten Speichers (1) größer als die Leerlaufspannung $U_{Bat2}$ des zweiten Speichers (2) ist, wobei
   bei Ladungsentnahme die elektrische Verbindung zwischen dem ersten Speicher (1) und den Anschlussklemmen ($K_e$) mittels des ersten Schalters ($S_1$) hergestellt und die elektrische Verbindung zwischen dem zweiten Speicher (2) und den Anschlussklemmen ($K_e$) mittels des zweiten Schalters ($S_2$) unterbrochen wird, so

dass zunächst nur dem ersten Speicher (1) Ladung entnommen wird, und dass die elektrische Verbindung zwischen dem zweiten Speicher (2) und den Anschlussklemmen ($K_e$) mittels des zweiten Schalters ($S_2$) hergestellt wird, wenn die Differenz der an den Anschlussklemmen des ersten Speichers (1) abfallenden Spannung und der Leerlaufspannung ($U_{Bat2}$) des zweiten Speichers (2) weniger als eine vorgegebene Zuschalt-Differenzspannung ($V_d$) beträgt, **dadurch gekennzeichnet, dass** für die Zuschalt-Differenzspannung ($V_d$) gilt:

$$V_d < I_{max} * R,$$

wobei $I_{max}$ den kleineren Wert des maximal zulässigen Stroms beim Zu- bzw. Abschalten des zweiten Speichers (2) und des Maximalstroms, der dem ersten und/oder zweiten Speicher (1, 2) zulässigerweise entnommen werden darf, darstellt und R die nach der Parallelschaltung des ersten und des zweiten Speichers (1, 2) wirksame Impedanz der Speicher (1, 2) darstellt.

2. Verfahren nach Anspruch 1, **dadurch gekennzeichnet, dass** bei Ladungszufuhr die elektrische Verbindung zwischen dem zweiten Speicher (2) und den Anschlussklemmen ($K_e$) mittels des zweiten Schalters ($S_2$) hergestellt und die elektrische Verbindung zwischen dem ersten Speicher (1) und den Anschlussklemmen ($K_e$) mittels des ersten Schalters ($S_1$) unterbrochen wird, so dass zunächst nur dem zweiten Speicher (2) Ladung zugeführt wird, und dass die elektrische Verbindung zwischen dem ersten Speicher (1) und den Anschlussklemmen ($K_e$) mittels des ersten Schalters ($S_1$) hergestellt wird, wenn die Differenz der an den Anschlussklemmen des zweiten Speichers (2) abfallenden Spannung und der Leerlaufspannung $U_{Bat1}$ des ersten Speichers (1) weniger als eine vorgegebene Zuschalt-Differenzspannung beträgt.

3. Verfahren nach Anspruch 1 oder 2, **dadurch gekennzeichnet, dass** der erste oder der zweite Speicher (1, 2) mehrere parallel geschaltete Speicher aufweisen.

4. Verfahren nach einem der Ansprüche 1 bis 3, **dadurch gekennzeichnet, dass** bei Parallelschaltung von mehr als zwei Speichern (1, 2) die Zuschalt-Differenzspannung der Impedanz der Speicher angepasst wird.

5. Verfahren nach einem der Ansprüche 1 bis 4, **dadurch gekennzeichnet, dass** bei Ladungszufuhr und bei Ladungsentnahme jeweils eine betragsmäßig gleiche Zuschalt-Differenzspannung gewählt wird.

6. Verfahren nach einem der Ansprüche 1 bis 5, **dadurch gekennzeichnet, dass** der zweite Speicher (2) von dem ersten Speicher (1) und von dem Verbraucher getrennt wird, wenn die an den Anschlussklemmen ($K_e$) gemessene Spannung von der Leerlaufspannung $U_{Bat2}$ des zweiten Speichers (2) um weniger als eine vorgegebene Abschalt-Differenzspannung abweicht, wobei sich die Abschalt-Differenzspannung von der Zuschalt-Differenzspannung unterscheidet.

7. Verfahren nach Anspruch 6, **dadurch gekennzeichnet, dass** bei Ladungsentnahme die Abschaltspannung größer als die Zuschaltspannung ist und dass bei Ladungszufuhr die Abschaltspannung kleiner als die Zuschaltspannung ist.

8. Verfahren nach einem der Ansprüche 1 bis 7, **dadurch gekennzeichnet, dass** bei Ladungsentnahme aus dem ersten Speicher (1) der zweite Speicher (2) von dem ersten Speicher (1) und von dem Verbraucher getrennt wird, wenn der Strom zum / vom zweiten Speicher (2) einen bestimmten Betrag nicht übersteigt.

9. Verfahren nach den Ansprüchen 6 bis 8 **dadurch gekennzeichnet, dass** das Abschalten des zweiten Speichers (2) innerhalb der Abschalt-Differenzspannung nur dann stattfindet, wenn der Gesamtstrom den zulässigen Strom des ersten Speichers (1) nicht mehr übersteigt.

10. Schaltung eines ersten elektrischen Speichers (1) und eines zweiten elektrischen Speichers (2), wobei der erste elektrische Speicher (1) und der zweite elektrische Speicher (2) jeweils eine Leerlaufspannung ($U_{Bat1}$, $U_{Bat2}$) und eine Impedanz ($R_1$ bzw. $R_2$) besitzen, wobei der erste elektrische Speicher (1) über zwei erste elektrische Leiter mit Anschlussklemmen ($K_e$) zur Ladungsentnahme oder Ladungszufuhr verbunden ist, wobei ein erster Schalter ($S_1$) in einem der ersten elektrischen Leiter vorgesehen ist, welcher eingerichtet ist, die elektrische Verbindung zwischen dem ersten Speicher (1) und den Anschlussklemmen ($K_e$) zu unterbrechen oder herzustellen, wobei der zweite elektrische Speicher (2) über zwei zweite elektrische Leiter mit den Anschlussklemmen ($K_e$) verbunden ist, wobei ein zweiter Schalter ($S_2$) in einem der zweiten elektrischen Leiter vorgesehen ist, welcher eingerichtet ist, die elektrische Verbindung zwischen dem zweiten Speicher (2) und den Anschlussklemmen ($K_e$) zu unterbrechen oder herzustellen, wobei ein erstes Messgerät zur Erfassung der speicherseitig des ersten Schalters ($S_1$) zwischen den beiden ersten elektrischen Leitern anliegenden Spannung und ein zweites Messgerät zur Erfassung der speicherseitig des zweiten Schalters ($S_2$) zwischen den beiden zweiten elektrischen Leitern anliegenden Spannung vorgesehen sind, wobei das erste und das zweite Messgerät an eine Steuereinheit angeschlossen sind, welche eine Vergleichseinheit zum Vergleichen der erfassten Spannungen und eine Ansteuerung des ersten und/oder zweiten Schalters ($S_1$, $S_2$) in Abhängigkeit von dem Vergleich aufweist, wobei die Steuereinheit eingerichtet ist, bei Ladungsentnahme und bei sich unterscheidenden Leerlaufspannungen ($U_{Bat1}$, $U_{Bat2}$) zunächst nur den Schalter ($S_1$, $S_2$) des Speichers (1, 2) mit der höheren Leerlaufspannung ($U_{Bat1}$, $U_{Bat2}$) leitend zu schalten, und ferner dazu eingerichtet ist, wenn die Differenz der an den Anschlussklemmen des zugeschalteten Speichers (1, 2) abfallenden Spannung und der Leerlaufspannung ($U_{Bat2}$, $U_{Bat1}$) des anderen Speichers (2, 1) geringer ist als eine vorgegebene Zuschalt-Differenzspannung ($V_d$), auch den Schalter ($S_2$, $S_1$) des Speichers (2, 1) mit der niedrigeren Leerlaufspannung ($U_{Bat2}$, $U_{Bat1}$) leitend zu schalten, **dadurch gekennzeichnet, dass** für die Zuschalt-Differenzspannung ($V_d$) gilt:

$$V_d < I_{max} * R,$$

wobei $I_{max}$ den kleineren Wert des maximal zulässigen Stroms beim Zu- bzw. Abschalten des zweiten Speichers (2) und des Maximalstroms, der dem ersten und/oder zweiten Speicher (1, 2) zulässigerweise entnommen werden darf, darstellt und R die nach der Parallelschaltung des ersten und des zweiten Speichers (1, 2) wirksame Impedanz der Speicher (1, 2) darstellt.

11. Schaltung nach Anspruch 10, **dadurch gekennzeichnet, dass** ein Strommessgerät zur Erfassung des von oder zu dem ersten und/oder zweiten Speicher (1, 2) fließenden Stroms vorgesehen ist.

**Claims**

1. Method for connecting in parallel a first electrical storage device (1), in particular a battery, preferably a lithium-ion battery, and a second electrical storage device (2), in particular a battery, preferably a lithium-ion battery,

   - wherein the first electrical storage device and the second electrical storage device each have an open-circuit voltage ($U_{Bat1}$, $U_{Bat2}$) and an impedance (R1 or R2)

- wherein the first electrical storage device (1) is connected to connection terminals ($K_e$) via two first electrical conductors for charge withdrawal or charge supply, wherein a first switch ($S_1$) is provided in one of the first electrical conductors, and wherein the electrical connection between the first storage device (1) and one of the connection terminals ($K_e$) can be established or interrupted by means of the first switch ($S_1$),
- wherein the second electrical storage device (2) is connected to the connecting terminals ($K_e$) via two second electrical conductors, wherein a second switch ($S_2$) is provided in one of the second electrical conductors, and wherein the electrical connection between the second storage device (2) and one of the connecting terminals ($K_e$) can be established or interrupted by means of the second switch ($S_2$),
- wherein the open-circuit voltage $U_{Bat1}$ of the first storage device (1) is greater than the open-circuit voltage $U_{Bat2}$ of the second storage device (2),

wherein,

when charge is withdrawn, the electrical connection between the first storage device (1) and the connection terminals ($K_e$) is established by means of the first switch ($S_1$) and the electrical connection between the second storage device (2) and the connection terminals ($K_e$) is interrupted by means of the second switch ($S_2$), so that initially only charge is withdrawn from the first storage device (1), and in that the electrical connection between the second storage device (2) and the connection terminals ($K_e$) is established by means of the second switch ($S_2$) when the difference between the voltage dropped at the connection terminals of the first storage device (1) and the open-circuit voltage ($U_{Bat2}$) of the second storage device (2) is less than a predetermined switch-on differential voltage ($V_d$), **characterised in that**

for the switch-on differential voltage ($V_d$) applies:

$$V_d < I_{max} * R,$$

wherein $I_{max}$ represents the smaller value of the maximum permissible current when connecting or disconnecting the second storage device (2) and of the maximum current, which may be taken from the first and/or second storage device (1, 2) in a permissible manner, and R represents the impedance of the storage devices (1, 2) effective after the parallel connection of the first and second storage devices (1, 2).

2. Method according to claim 1, **characterised in that** when charge is supplied, the electrical connection between the second storage device (2) and the connection terminals ($K_e$) is established by means of the second switch ($S_2$) and the electrical connection between the first storage device (1) and the connection terminals ($K_e$) is interrupted by means of the first switch ($S_1$), so that charge is initially supplied only to the second storage device (2), and **in that** the electrical connection between the first storage device (1) and the connection terminals ($K_e$) is established by means of the first switch ($S_1$) when the difference between the voltage dropped at the connection terminals of the second storage device (2) and the open-circuit voltage $U_{Bat1}$ of the first storage device (1) is less than a predetermined switch-on differential voltage.

3. Method according to claim 1 or 2, **characterized in that** the first or the second storage device (1, 2) comprises several storage devices connected in parallel.

4. Method according to one of claims 1 to 3, **characterized in that** when more than two storage devices (1, 2) are connected in parallel, the switch-on differential voltage is adapted to the impedance of the storage devices.

5. Method according to one of claims 1 to 4, **characterised in that** a connection differential voltage of the same amount is selected for the supply of charge and for the removal of charge.

6. Method according to one of claims 1 to 5, **characterized in that** the second storage device (2) is disconnected from the first storage device (1) and from the load when the voltage measured at the connection terminals ($K_e$) differs from the open-circuit voltage $U_{Bat2}$ of the second storage device (2) by less than a predetermined switch-off differential voltage, wherein the switch-off differential voltage differs from the switch-on differential voltage.

7. Method according to claim 6, **characterized in that** the switch-off voltage is greater than the switch-on voltage when the charge is withdrawn and that the switch-off voltage is less than the switch-on voltage when the charge is supplied.

8. Method according to one of claims 1 to 7, **characterised in that** when charge is withdrawn from the first storage device (1), the second storage device (2) is disconnected from the first storage device (1) and from the consumer if the current to/from the second storage device (2) does not exceed a certain amount.

9. Method according to claims 6 to 8, **characterized in**

**that** the switch-off of the second storage device (2) within the switch-off differential voltage only takes place when the total current no longer exceeds the permissible current of the first storage device (1).

10. Circuit of a first electric storage device (1) and a second electric storage device (2), wherein the first electric storage device (1) and the second electric storage device (2) each have an open-circuit voltage ($U_{Bat1}$, $U_{Bat2}$) and an impedance (R1 or R2), wherein the first electrical storage device (1) is connected to connection terminals ($K_e$) via two first electrical conductors for charge withdrawal or charge supply, wherein a first switch ($S_1$) is provided in one of the first electrical conductors, which is arranged to interrupt or establish the electrical connection between the first storage device (1) and the connection terminals ($K_e$), wherein the second electrical storage device (2) is connected to the connection terminals ($K_e$) via two second electrical conductors, wherein a second switch ($S_2$) is provided in one of the second electrical conductors, which is arranged to interrupt or establish the electrical connection between the second storage device (2) and the connecting terminals ($K_e$), wherein a first measuring device is provided for detecting the voltage applied between the two first electrical conductors on the storage device side of the first switch ($S_1$) and wherein a second measuring device being provided for detecting the voltage applied between the two second electrical conductors on the storage device side of the second switch ($S_2$), wherein the first and the second measuring device are connected to a control unit, which comprises a comparison unit for comparing the detected voltages and a control of the first and/or second switch ($S_1$, $S_2$) depending on the comparison, wherein the control unit is arranged, in the event of charge withdrawal and in the event of differing open-circuit voltages ($U_{Bat1}$, $U_{Bat2}$), to initially connect conductively only the switch ($S_1$, $S_2$) of the storage device (1, 2) with the higher open-circuit voltage ($U_{Bat1}$, $U_{Bat2}$), and is further arranged, if the difference between the voltage dropped at the connection terminals of the connected storage device (1, 2) and the open-circuit voltage ($U_{Bat2}$, $U_{Bat1}$) of the other storage device (2, 1) is less than a predetermined switch-on differential voltage ($V_d$), to also connect conductively the switch ($S_2$, $S_1$) of the storage device (2, 1) with the lower open-circuit voltage ($U_{Bat2}$, $U_{Bat1}$), **characterised in that** for the switch-on differential voltage ($V_d$) applies:

$$V_d < I_{max} * R,$$

wherein $I_{max}$ represents the smaller value of the maximum permissible current when connecting or disconnecting the second storage device (2) and of the maximum current, which may be taken from the first and/or second storage device (1, 2) in a permissible manner, and R represents the impedance of the storage devices (1, 2) effective after the parallel connection of the first and second storage devices (1, 2).

11. Circuit according to claim 10, **characterized in that** a current measuring device is provided for detecting the current flowing from or to the first and/or second storage device (1, 2).

## Revendications

1. Procédé pour connecter en parallèle un premier dispositif de stockage électrique (1), en particulier une batterie, de préférence une batterie lithium-ion, et un deuxième dispositif de stockage électrique (2), en particulier une batterie, de préférence une batterie lithium-ion,

   - dans lequel le premier dispositif de stockage électrique et le deuxième dispositif de stockage électrique présentent chacun une tension de circuit ouvert ($U_{Bat1}$, $U_{Bat2}$) et une impédance (R1 ou R2)
   - dans lequel le premier dispositif de stockage électrique (1) est connecté à des bornes de connexion ($K_e$) par l'intermédiaire deux premiers conducteurs électriques pour le prélèvement de charge ou la fourniture de charge, dans lequel un premier commutateur ($S_1$) est prévu dans l'un des premiers conducteurs électriques, et dans lequel la connexion électrique entre le premier dispositif de stockage (1) et l'une des bornes de connexion ($K_e$) peut être établie ou interrompue au moyen du premier commutateur ($S_1$),
   - dans lequel le deuxième dispositif de stockage électrique (2) est connecté aux bornes de connexion ($K_e$) par l'intermédiaire de deux deuxièmes conducteurs électriques, dans lequel un deuxième commutateur ($S_2$) est prévu dans l'un des deuxièmes conducteurs électriques, et dans lequel la connexion électrique entre le deuxième dispositif de stockage (2) et l'une des bornes de connexion ($K_e$) peut être établie ou interrompue au moyen du deuxième commutateur ($S_2$),
   - dans lequel la tension à vide $U_{Bat1}$ du premier dispositif de stockage (1) est supérieure à la tension à vide $U_{Bat2}$ du deuxième dispositif de stockage (2),
   dans lequel,
   lorsque la charge est retirée, la connexion électrique entre le premier dispositif de stockage (1) et les bornes de connexion ($K_e$) est établie au

moyen du premier commutateur (S$_1$) et la connexion électrique entre le deuxième dispositif de stockage (2) et les bornes de connexion (K$_e$) est interrompue au moyen du deuxième commutateur (S$_2$), de sorte qu'initialement seule la charge est retirée du premier dispositif de stockage (1), et en ce que la connexion électrique entre le deuxième dispositif de stockage (2) et les bornes de connexion (K$_e$) est établie au moyen du deuxième commutateur (S$_2$) lorsque la différence entre la baisse de tension aux bornes de connexion du premier dispositif de stockage (1) et la tension de circuit ouvert (U$_{Bat2}$) du deuxième dispositif de stockage (2) est inférieure à une tension différentielle de connexion prédéterminée (V$_d$),

**caractérisé en ce que**

pour la tension différentielle de connexion (V$_d$) s'applique :

$$V_d < I_{max} * R,$$

dans lequel I$_{max}$ représente la plus petite valeur du courant maximal admissible lors de la connexion ou de la déconnexion du deuxième dispositif de stockage (2) et du courant maximal qui peut être prélevé du premier et/ou du deuxième dispositif de stockage (1, 2) de manière admissible, et R représente l'impédance des dispositifs de stockage (1, 2) efficace après la connexion en parallèle des premier et deuxième dispositifs de stockage (1, 2).

2. Procédé selon la revendication 1, **caractérisé en ce que**, lors de la fourniture de charge, la liaison électrique entre le deuxième dispositif de stockage (2) et les bornes de connexion (K$_e$) est établie au moyen du deuxième commutateur (S$_2$) et la liaison électrique entre le premier dispositif de stockage (1) et les bornes de raccordement (K$_e$) est interrompue au moyen du premier commutateur (S$_1$), de sorte que la charge est d'abord fournie uniquement au deuxième dispositif de stockage (2), et **en ce que** la connexion électrique entre le premier dispositif de stockage (1) et les bornes de connexion (K$_e$) est établie au moyen du premier commutateur (S$_1$) lorsque la différence entre la baisse de tension aux bornes de connexion du deuxième dispositif de stockage (2) et la tension à vide U$_{Bat1}$ du premier dispositif de stockage (1) est inférieure à une tension différentielle de connexion prédéterminée.

3. Procédé selon la revendication 1 ou 2, **caractérisée en ce que** le premier ou le deuxième dispositif de stockage (1, 2) comprend plusieurs dispositifs de stockage connectés en parallèle.

4. Procédé selon l'une des revendications 1 à 3, **caractérisé en ce que**, lorsque plus de deux dispositifs de stockage (1, 2) sont connectés en parallèle, la tension différentielle de connexion est adaptée à l'impédance des dispositifs de stockage.

5. Procédé selon l'une des revendications 1 à 4, **caractérisée en ce qu'**une tension différentielle de connexion de même valeur est choisie pour la fourniture de charge et pour le retrait de charge.

6. Procédé selon l'une des revendications 1 à 5, **caractérisé en ce que** le deuxième dispositif de stockage (2) est déconnecté du premier dispositif de stockage (1) et de la charge lorsque la tension mesurée aux bornes de connexion (K$_e$) diffère de la tension de circuit ouvert U$_{Bat2}$ du deuxième dispositif de stockage (2) de moins d'une tension différentielle de déconnexion prédéterminée, dans laquelle la tension différentielle de déconnexion diffère de de la tension différentielle de connexion.

7. Procédé selon la revendication 6, **caractérisé en ce que** la tension de déconnexion est supérieure à la tension de connexion lorsque la charge est retirée et que la tension de déconnexion est inférieure à la tension de connexion lorsque la charge est fournie.

8. Procédé selon l'une des revendications 1 à 7, **caractérisé en ce que**, lorsque la charge est retirée du premier dispositif de stockage (1), le deuxième dispositif de stockage (2) est déconnecté du premier dispositif de stockage (1) et du consommateur si le courant vers/depuis le deuxième dispositif de stockage (2) ne dépasse pas une certaine quantité.

9. Procédé selon les revendications 6 à 8, **caractérisé en ce que** la déconnexion du deuxième dispositif de stockage (2) dans les limites de la tension différentielle de déconnexion n'a lieu que lorsque le courant total ne dépasse plus le courant admissible du premier dispositif de stockage (1).

10. Circuit d'un premier dispositif de stockage électrique (1) et d'un deuxième dispositif de stockage électrique (2), dans lequel le premier dispositif de stockage électrique (1) et le deuxième dispositif de stockage électrique (2) présentent chacun une tension de circuit ouvert (U$_{Bat1}$, U$_{Bat2}$) et une impédance (R1 ou R2), dans lequel le premier dispositif de stockage électrique (1) est connecté à des bornes de connexion (K$_e$) par l'intermédiaire de deux premiers conducteurs électriques pour le retrait de charge ou la fourniture de charge, dans lequel un premier commutateur (S$_1$) est prévu dans l'un des premiers conducteurs électriques, qui est agencé pour interrompre ou établir la connexion électrique entre le premier dispositif de stockage (1) et les bornes de connexion

(K$_e$), dans lequel le deuxième dispositif de stockage électrique (2) est connecté aux bornes de connexion (K$_e$) par l'intermédiaire de deux deuxièmes conducteurs électriques, dans lequel un deuxième commutateur (S$_2$) est prévu dans l'un des deuxièmes conducteurs électriques, qui est agencé pour interrompre ou établir la connexion électrique entre le deuxième dispositif de stockage (2) et les bornes de connexion (K$_e$), dans lequel un premier dispositif de mesure est prévu pour détecter la tension appliquée entre les deux premiers conducteurs électriques sur le côté dispositif de stockage du premier commutateur (S$_1$) et dans lequel un deuxième dispositif de mesure est prévu pour détecter la tension appliquée entre les deux deuxièmes conducteurs électriques sur le côté dispositif de stockage du deuxième commutateur (S2), dans lequel le premier et le deuxième dispositif de mesure sont reliés à une unité de commande, qui comprend une unité de comparaison pour comparer les tensions détectées et une commande du premier et/ou du deuxième commutateur (S$_1$, S$_2$) en fonction de la comparaison,

dans lequel l'unité de commande est agencée, en cas de retrait de charge et en cas de tensions de circuit ouvert différentes (U$_{Bat1}$, U$_{Bat2}$), pour ne connecter initialement de manière conductrice que le commutateur (S$_1$, S$_2$) du dispositif de stockage (1, 2) avec la tension de circuit ouvert la plus élevée (U$_{Bat1}$, U$_{Bat2}$), et

est en outre agencé, si la différence entre la baisse de tension aux bornes de connexion du dispositif de stockage connecté (1, 2) et la tension de circuit ouvert (U$_{Bat2}$, U$_{Bat1}$) de l'autre dispositif de stockage (2, 1) est inférieure à une tension différentielle de connexion prédéterminée (V$_d$), à connecter également de manière conductrice le commutateur (S$_2$, S$_1$) du dispositif de stockage (2, 1) avec la tension de circuit ouvert inférieure (U$_{Bat2}$, U$_{Bat1}$), **caractérisé en ce que** pour la tension différentielle de connexion (Vd) s'applique :

$$Vd < Imax * R,$$

dans lequel I$_{max}$ représente la plus petite valeur du courant maximal admissible lors de la connexion ou de la déconnexion du deuxième dispositif de stockage (2) et du courant maximal qui peut être prélevé du premier et/ou du deuxième dispositif de stockage (1, 2) de manière admissible, et R représente l'impédance des dispositifs de stockage (1, 2) efficace après la connexion en parallèle des premier et deuxième dispositifs de stockage (1, 2).

11. Circuit selon la revendication 10, **caractérisé en ce qu'**un dispositif de mesure de courant est prévu pour détecter le courant qui circule à partir ou vers le premier et/ou le deuxième dispositif de stockage (1, 2).

# Fig. 1

## Fig. 2

## Fig. 3

## Fig. 4

## Fig. 5

**EP 2 493 050 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1811592 B1
- EP 0871275 A2
- DE 102009012908 A1